# EUROPEAN PATENT APPLICATION

(11) **EP 2 259 500 A1**
(43) Date of publication of application: **08.12.2010**
(21) Application number: 10004755.4
(22) Date of filing: 05.05.2010
(51) Int. Cl.: H04L 12/46, H04L 12/56

(54) **Method and device for failover of a L2TP connection**

(30) Priority: 02.06.2009 JP 2009132900
(71) Applicant: Hitachi, Ltd., Chiyoda-ku Tokyo 100-8280 (JP)
(72) Inventor: Himeno, Masato, Tokyo 100-8220 (JP); Kimura, Fuminori, Tokyo 100-8220 (JP); Kuriyama, Teruki, Tokyo 100-8220 (JP)
(74) Representative: Strehl Schübel-Hopf & Partner

(57) **Abstract**

In an LAC device, if switching occurs to an active system of redundant control section, the failover is implemented by learning Ns (sequence number) and Nr (receive acknowledgement response number) included in a control message received from an LNS device after switching, and sending a ZLB-ACK message using this Ns and Nr.

## Description

### BACKGROUND OF THE INVENTION

### Field of the Invention

The present invention relates to an LAC device and a failover method, and more particularly to an LAC device and a failover method for relaying communication using an L2TP.

### Description of the Related Art

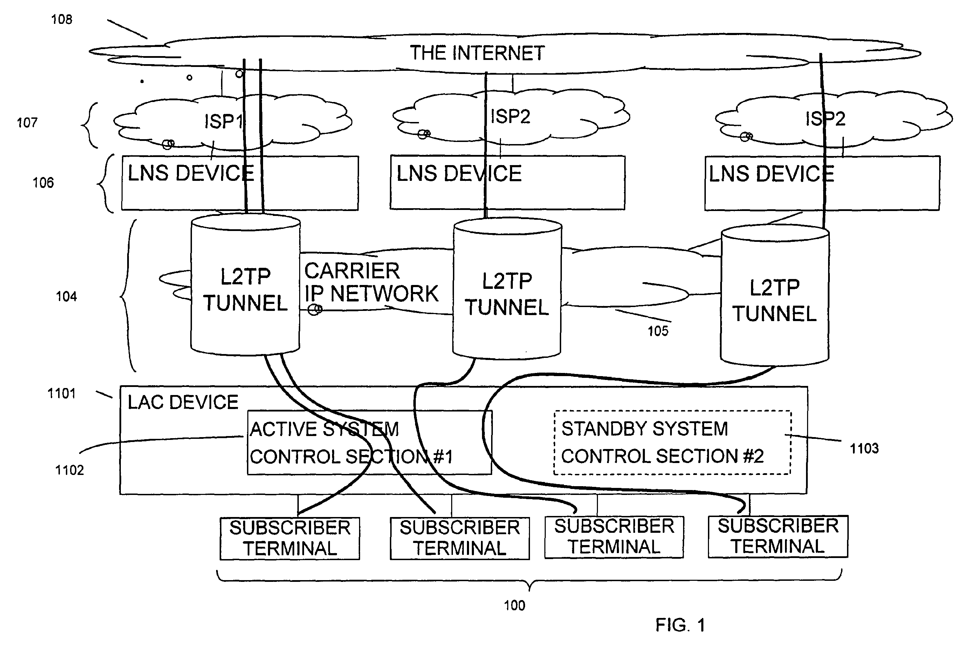

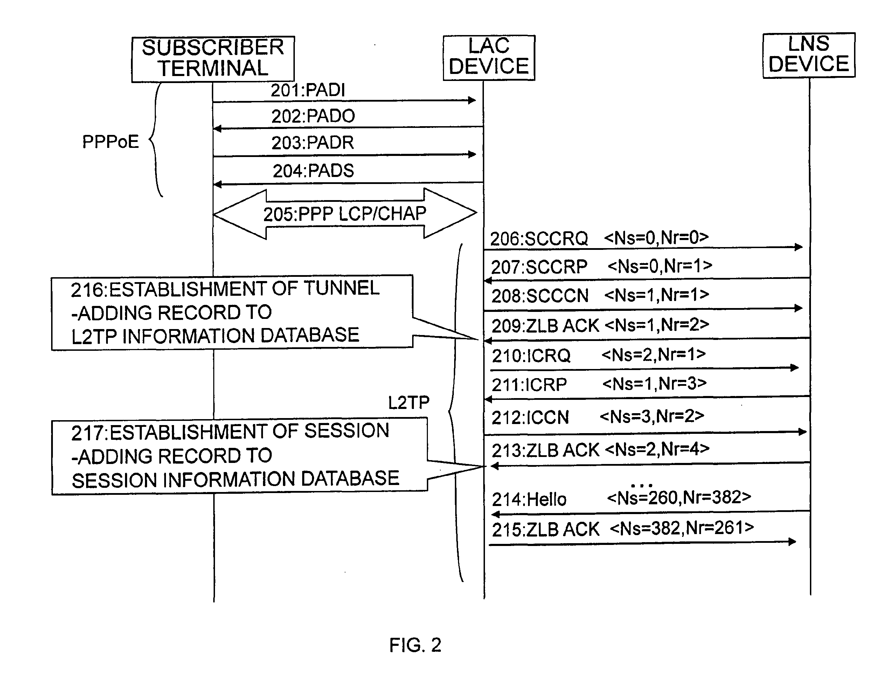

Nowadays, a carrier provides a broadband internet connection service with an Asymmetric Digital Subscriber Line (ADSL) or Fiber To The Home (FTTH) to a subscriber, using a tunneling method with an Layer2 Tunneling Protocol (L2TP). An L2TP Access Concentrator (LAC) is a server for receiving a subscriber terminal. Fig. 1 shows a configuration diagram for providing the internet connection service to the subscriber in which the LAC cooperates with an L2TP Network Server (LNS) using the Layer2 Tunneling Protocol (L2TP), and Fig. 2 shows its protocol sequence. The subscriber uses the internet connection service, using an L2TP tunnel (generated at 206 to 209 in Fig. 2) constructed between the LAC and the LNS, as shown in Fig. 1.

Conventionally, the LAC device in which a control section for performing the protocol processing such as L2TP is made redundant has a technique for switching from an old active system control section to a new active system control section and continuing a service if a fault occurs in an active system control section (hereinafter referred to as a failover), and the technique for making the failover using a packet for recovery contact as defined in an extended protocol of the L2TP was disclosed in RFC4951, Fail Over Extensions for Layer 2 Tunneling Protocol (L2TP), "failover".

### SUMMARY OF THE INVENTION

The L2TP is a protocol operating on a UDP, in which the sequencing and reliability of messages are realized using a sequence number (Ns) and a receive acknowledgement response number (Nr) included in a control message for use in establishing a tunnel (206 to 209 in Fig. 2), establishing a session (210 to 213 in Fig. 2), and a periodical birth-death confirmation (214 to 215 in Fig. 2) between the LAC and the LNS.

Herein, if Ns or Nr is not an expected number, for example, there is no mutual understanding between the LAC and the LNS because a fault occurs on the network, the L2TP tunnel is disconnected in the specification.

Therefore, in the LAC device made dual in the conventional form, if a failure occurs in the active system control section and switching between the active system control section and a standby system control section occurs in a state where synchronization between Ns and Nr included in a control message fails, the L2TP tunnel is disconnected in the new active system control section, so that the communication through the internet connection of the subscriber is once stopped.

In the non-patent document 1, to avoid the above state, the L2TP protocol is extended, and at the time of device recovery, a message for conveying recovery is sent to the LNS device to relearn the information required for communication from the LNS device, implementing the continuation of communication.

On the other hand, with the method of the non-patent document 1, it is required to dispose the device implementing the method of the non-patent document 1 in both the LAC device and the LNS device, whereby if there is the device not supporting the method of the non-patent document 1, a failover function does not operate.

In the light of the above-mentioned points, it is an object of the invention to provide an LAC device and a failover method for enabling the failover with the improved LAC device. Also, it is another object of the invention to enable the failover without implementing the method of the non-patent document 1.

It is a further object of the invention that even if system switching occurs in a state where the standby system control section fails in synchronization between Ns and Nr included in the control message because a fault occurs in the active system control section, Ns and Nr sent from the LNS device after system switching are learned and resynchronized, whereby the failover is enabled without stopping the internet connection service, and the service is continued without interruption.

In order to solve the above-mentioned problems, the LAC device according to this invention is provided in which if switching of the active system control section occurs in the LAC device, Ns and Nr included in the control message received from the LNS device after switching are learned and a ZLB-ACK message using the learned Ns and Nr is sent to the LNS device, avoiding the service suspension due to disconnection of the tunnel, and enabling the failover. For example, the Ns value and Nr value of the packet received from the LNS device are learned after system switching occurs, and the ZLB ACK (acknowledgement response message) in which the Ns value is the received Nr value and the Nr is the received Ns value plus 1 is sent to the LNS device. Also, the new connection request from the user is stopped until receiving the packet from the LNS device after system switching occurs, avoiding disconnection of the L2TP tunnel to the LNS device.

As a means, for example, the LAC device for relaying the communication between the subscriber terminal and a plurality of LNS devices providing the internet connection service to the subscriber terminal comprises a protocol processing section for performing the protocol processing for the subscriber terminal and the LNS device, based on the state of the LAC device, and a synchronization control section for controlling the synchronous state between the active system control section and the standby system control section in the LAC device.

Also, the LAC device has two control sections made dual in a hot standby form, each control section comprising a database for holding the protocol information, a monitor section for monitoring the operation state, a synchronization control section for synchronizing the information between the control sections, and a protocol processing section for processing the packet sent from the subscriber terminal and the LNS device and relearning the information based on the received packet if system switching of the control sections occurs, for example.

According to the first solving means of this invention, there is provided an LAC device in a system which includes an LNS device that provides a network connection service to a terminal and the LAC device that communicates with the LNS device by establishing an L2TP tunnel according to an L2TP protocol, the LAC device and the LNS device sending a control message that includes a sequence number for identifying the control message, and a receive acknowledgement response number that is the sequence number of the control message expected to receive at the next time and is based on the sequence number included in received other control message, and the LAC device sending an acknowledgement response message to the LNS device, upon receiving the predetermined control message including the sequence number of the same value as the receive acknowledgement response number from the LNS device, the L2TP tunnel being disconnected if the acknowledgement response message is not received by the LAC device for the predetermined control message sent from the LNS device, the LAC device comprising:
a first control section for an active system that performs a protocol process for the L2TP by sending and receiving the control message to or from the LNS device;
a second control section for a standby system that is switched to the active system if a fault is detected in the first control section; and
a monitor section for detecting at least the fault in the first control section;
   wherein
   the second control section, which is switched from the standby system to the active system due to a detection of the fault in the first control section for the active system, learns the sequence number and the receive acknowledgement response number for sending the control message from self LAC device to the LNS device, based on the sequence number and the receive acknowledgement response number of the control message received from the LNS device after a switching.

According to the second solving means of this invention, there is provided a failover method in a system which includes an LNS device that provides a network connection service to a terminal and the LAC device that communicates with the LNS device by establishing an L2TP tunnel according to an L2TP protocol, the LAC device and the LNS device sending a control message that includes a sequence number for identifying the control message, and a receive acknowledgement response number that is the sequence number of the control message expected to receive at the next time and is based on the sequence number included in received other control message, and the LAC device sending an acknowledgement response message to the LNS device, upon receiving the predetermined control message including the sequence number of the same value as the receive acknowledgement response number from the LNS device, the L2TP tunnel being disconnected if the acknowledgement response message is not received by the LAC device for the predetermined control message sent from the LNS device, the failover method comprising the steps of:
detecting a fault in a first control section for an active system of the LAC device, the first control section performing a protocol process for the L2TP by sending and receiving the control message to or from the LNS device;
switching a second control section for a standby system of the LAC device to the active system; and
learning, by the second control section of the LAC device, the sequence number and the receive acknowledgement response number for sending the control message from self LAC device to the LNS device, based on the sequence number and the receive acknowledgement response number of the control message received from the LNS device after the switching.

According to the invention, it is possible to provide an LAC device and a failover method for enabling the failover with the improved LAC device. Also, according to the invention, it is possible to enable the failover without implementing the method of the non-patent document 1.

According to the invention that even if system switching occurs in a state where the standby system control section fails in synchronization between Ns and Nr included in the control message because a fault occurs in the active system control section, Ns and Nr sent from the LNS device after system switching are learned and resynchronized, whereby the failover is enabled without stopping the internet connection service, and the service is continued without interruption.

### BRIEF DESCRIPTION OF THE DRAWINGS

Fig. 1 is a network configuration diagram of this embodiment.
Fig. 2 is a sequence chart showing the sequence of a protocol for use in this embodiment.
Fig. 3 is a configuration diagram of an LAC device according to this embodiment.
Fig. 4 is a view showing the data structure of an L2TP information database according to this embodiment.
Fig. 5 is a view showing the data structure of a session information database according to this embodiment.
Fig. 6 is a sequence chart showing the sequence of an active system control section failure in the dual LAC device to explain the conventional problem.
Fig. 7 is a flowchart showing the flow of a failover according to this embodiment.
Fig. 8 is a sequence chart showing the sequence of protocol according to this embodiment.

### DETAILED DESCRIPTION OF THE INVENTION

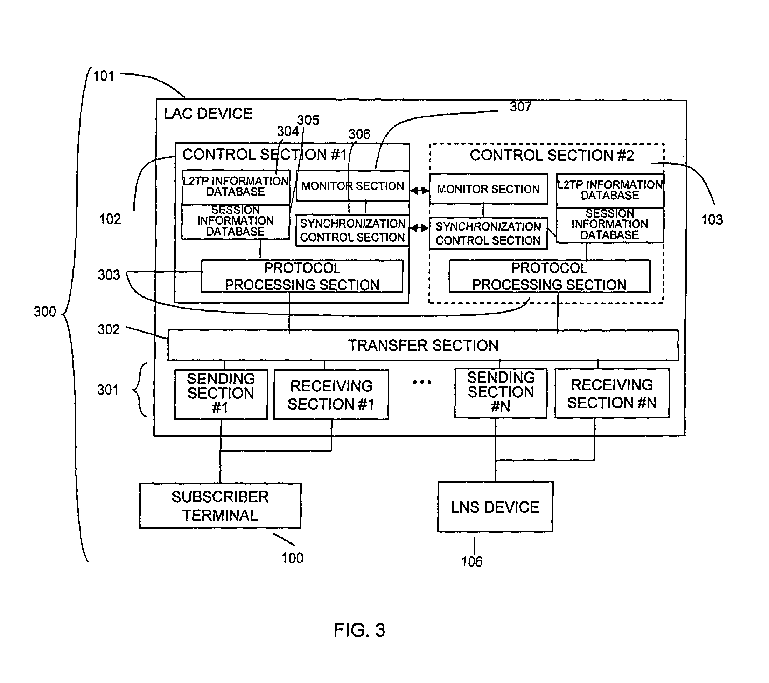

Fig. 3 is a diagram showing a relay system 300 according to this embodiment.

The relay system 300 has an LAC device (access device) 101, a plurality of subscriber terminals 100 communicable with the LAC device 101, and a plurality of LNS devices (network servers) 106 communicable with the LAC device 101.

The LAC device 101 has a plurality of sending and receiving sections 301 for communicating with the plurality of subscriber terminals 100, the plurality of sending and receiving sections 301 for communicating with the plurality of LNS devices 106, a transfer section 302 for performing a packet transfer process for the sending and receiving sections, and a control section (an active system control section 102 and a standby system control section 103) made dual in a hot standby form.

The subscriber terminal 100 is an information processing apparatus such as a personal computer connected to the LAC device 101. For example, the subscriber terminal 100 is a personal computer or a broadband router used by the user in the ordinary family. The subscriber terminal 100 is connected to the sending and receiving sections 301 of the LAC device 101 via a communication line such as Asymmetric Digital Subscriber Line (ADSL) or Fiber To The Home (FTTH) using a PPP Over Ethernet: Ethernet is the registered trademark (PPPoE) protocol. The subscriber terminal 100 connected via the LAC device 101 to the LNS device 106 establishes the connection with an Internet Service Provider (ISP) connected to the LNS device 106 to connect to the internet.

The LAC device 101 or the LNS device 106 is a server apparatus for providing the connection service to the ISP, for example, a server apparatus prepared by the carrier.

The plurality of sending and receiving sections 301 are interfaces for connecting the subscriber terminal 100 with the LAC device 101, and the LAC device 101 with the LNS device 106, to make the communication. The packet communication is performed via the sending and receiving sections 301.

The transfer section 302 transfers the packet received from the receiving section to the control section 102 or 103, and transfers the packet sent from the control section 102 or 103 to the appropriate sending section in accordance with an instruction of the control section.

Each of the control section 102 and the control section 103 has a protocol processing section 303, an L2TP information database 304, a session information database 305, a synchronization control section 306, and a monitor section 307.

The protocol processing section 303 processes the packets 201 to 205 that are exchanged between the subscriber terminal 100 and the LAC device 101 as shown in Fig. 2, and establishes a PPoE session with the subscriber terminal 100. Also, the protocol processing section 303 processes the packets 206 to 215 that are exchanged between the LAC device 101 and the LNS device 106 as shown in Fig. 2, and establishes an L2TP (Layer2 Tunneling Protocol) tunnel session with the LNS device 106. Further, for the data communication corresponding to the established session, it performs a packet encapsulation and de-capsulation process for making the IP communication between the subscriber terminal 100 and the LNS device 106, based on the L2TP information database 304 and the session information database 305.

The synchronization control section 306 performs a synchronization process for the L2TP information database 304 and the session information database 305 to implement the duality in the hot standby form between the control section 102 and the control section 103. The synchronization process is performed at the timing when a record is added or deleted to or from the L2TP information database 304 and the session information database 305, for example.

The monitor section 307 monitors the active system control section and the standby system control section in the control section 102 and the control section 103 to implement the duality in the hot standby form. For example, it confirms the survival in the active system and the standby system. The monitor section 307 may exist in each control section, or have a different configuration from the control section.

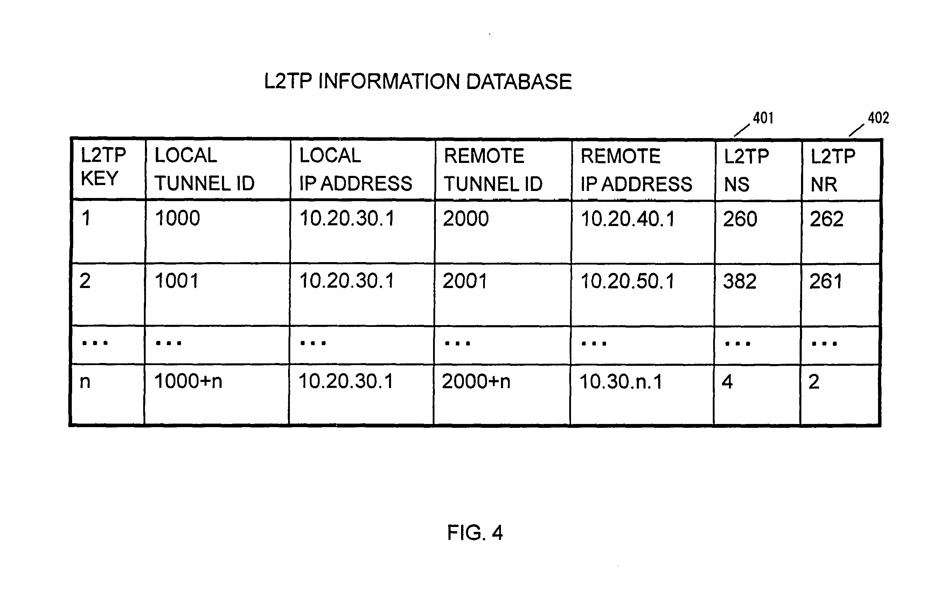

Fig. 4 shows the data structure of the L2TP information database 304.

The L2TP information database 304 has the L2TP Tunnel information (tunnel information) for each LNS device 106 processed in the protocol processing section, the IP address information, the Ns information (sequence number information) 401 and the Nr information (acknowledgement response number information) 402.

In an example of Fig. 4, the L2TP information database 304 stores, for each L2TP Key, the Local Tunnel ID, the Local IP Address, the Remote Tunnel ID, the Remote IP Address, the Ns information 401 and the Nr information 402. Each Tunnel ID corresponds to the L2TP Tunnel information and each IP Address corresponds to the IP address information.

The L2TP Key represents the identification information such as number for identifying the line of database. For example, it can be used to match the session number of PPPoE with the L2TP tunnel. The Local Tunnel ID is the number individually used in the self device (LAC device in this embodiment) in generating the L2TP tunnel and used to specify the L2TP tunnel. The Local IP Address is the IP address used by the self device (LAC device). The Remote Tunnel ID is the number notified from an external operation device (LNS device in this embodiment) in generating the L2TP tunnel and used to specify the L2TP tunnel. For the L2TP tunnel, one tunnel is decided by a pair of the Local Tunnel ID and the Remote Tunnel ID. The Remote IP Address is the IP address used by the external operation device (LNS device).

The record of the database 304 is added at the timing of establishing the tunnel with the LNS device 106 (216 in Fig. 2), and deleted at the timing of disconnecting the tunnel. Every time the Ns and Nr are updated by sending and receiving the L2PT control packet (206 to 215 in Fig. 2), the Ns value field 401 and the Nr value field 402 are updated.

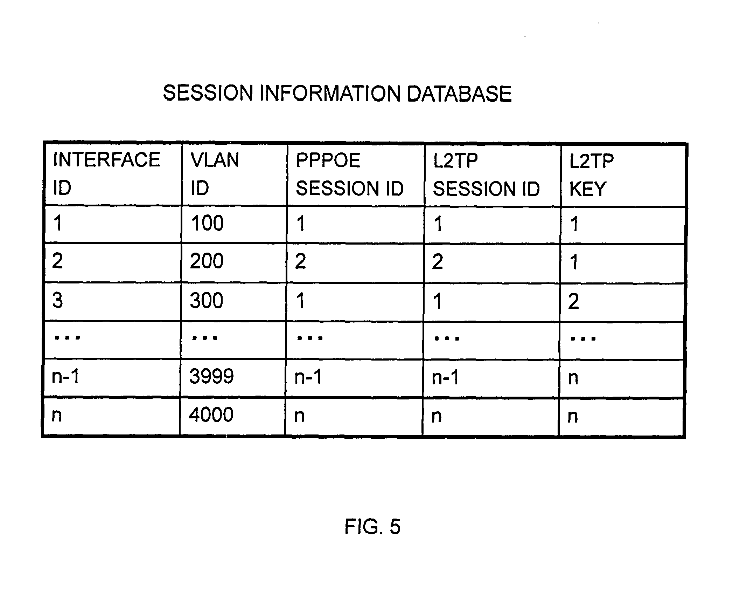

Fig. 5 shows the data structure of the session information database 305.

The session information database 305 has the interface ID (e.g., the number of the sending and receiving section 301) connected to the subscriber terminal 100, Virtual LAN (VLAN)-ID, PPPoE session information (ID) for each subscriber terminal 100 processed in the protocol processing section 303, L2TP session information (ID) and L2TP Key.

The VLAN ID is the ID for specifying the VLAN used by the user. The PPPoE Session ID is the ID for specifying the user with the PPPoE. The record of the session information database 305 is added at the timing of establishing the session (217 in Fig. 2) and deleted at the timing of disconnecting it.

Herein, the sequence number (Ns) and the acknowledgement response number (Nr) will be described below. The details are defined in the protocol.

The Ns number is the sequence number given to make the message unique when the sender sends a message other than the ZLB-ACK (acknowledgement response message) in Fig. 2. The Ns number is incremented by one for each send message to identify the message uniquely. For the message after sending the ZLB-ACK, it is not incremented exceptionally. The range of number is from 0 to 65535 and it returns to zero when reaching 65535.

The Nr number is the number used to notify the sender of the Ns number of the message that the receiver expects to receive at the next time from the sender. Conversely, it is the acknowledgement response number used to notify the sender that the message of Nr number -1 is received. The range of the number is from 0 to 65535, for example, and it returns to zero when reaching 65535. The Ns number can have the first sequence number for the message from the LAC to the LNS and the second sequence number from the LNS to the LAC. The Nr number is similarly treated.

How the Ns and Nr numbers are rewritten based on the above rule will be described below, taking Fig. 2 as an example.
(1) Sending the message of 206 in Fig. 2 from the LAC device
   Where Ns and Nr are the initial value 0.
(2) Sending the message of 207 in Fig. 2 from the LNS device Where Ns is the initial value 0. On the other hand, Nr is 1 using the Ns value of 206 plus 1 because the message of 206 in Fig. 2 is received.
(3) Sending the message of 208 in Fig. 2 from the LAC device Where Ns is 1 by incrementing the value by 1 from Ns = 0 of the message of 206 in (1). On the other hand, Nr is 1 because the message of 207 in Fig. 2 is received.
(4) Sending the message of 209 in Fig. 2 from the LNS device Where Ns is 1 by incrementing the value by 1 from Ns = 0 of the message of 207 in (2). On the other hand, Nr is 2 because the message of 208 in (3) is received.

The Ns and Nr numbers are changed in this manner.

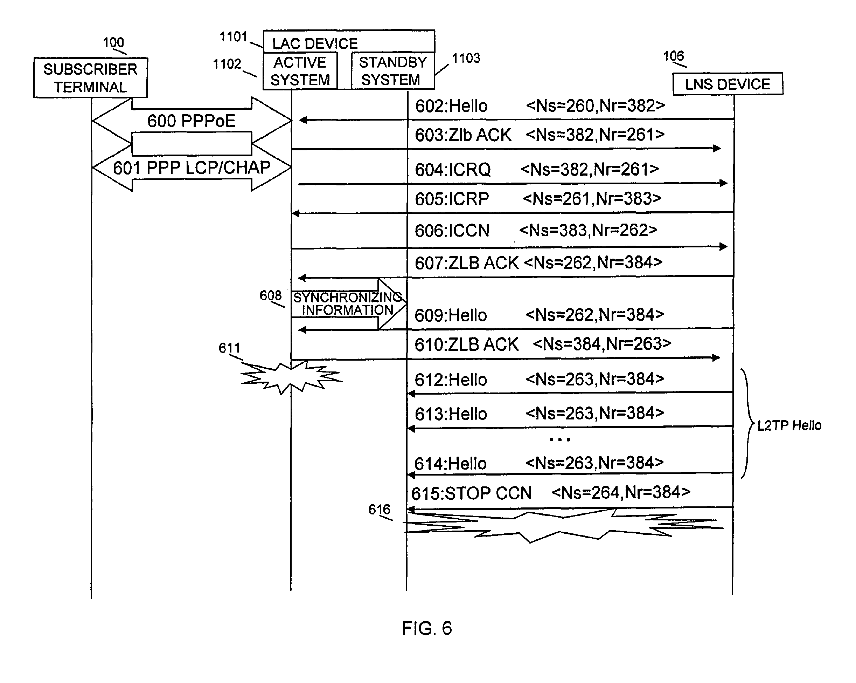

Fig. 6 shows a sequence for explaining the problem where the failure switching of the active system control section occurs with the conventional method without using this invention. The operation and problem where the failure switching of the active system control section occurs with the conventional method will be described below.

First of all, the subscriber terminal 100 makes the connection with the active system control section 1102 of the LAC device in PPPoE600 and PPP601. And the active system control section 1102 of the LAC device performs an establishment process 603 to 607 for the L2TP session with the LNS device 106, and synchronizes the information of the L2TP information database and the session information database with the standby system control section 1103 at the timing when the session of the subscriber terminal is established (608).

Thereafter, the LNS device 106 sends Hello 609 that is a periodical birth-death confirmation message for the L2TP to the active system control section 101 of the LAC device, and the active system control section 1102 of the LAC device sends the ZLB-ACK. In an example of Fig. 6, Hello 609 has Ns=262 and Nr=384, and the ZLB-ACK 610 has Ns=384 and Nr=263. As the LAC device, because the information synchronization is made before receiving the message of Hello 609, the information (Ns=262, Nr=384) of receiving the message of Hello 609 is not synchronized in the new active system (old standby system) control section 1103 after switching. For example, the old active system control section 1102 waits for the message with Ns=263, while the new active system control section 1103 waits for the message with Ns=262. On the other hand, as the LNS device 106 receives the message of the ZLB-ACK 610, the Ns number of the message sent at the next time is 263. In this way, there is unmatch of information between the LAC device 1101 and the LNS device 106.

Herein, if a failure 611 occurs in the active system control section, switching of the active system occurs. The new active system control section 1103 of the LAC device receives Hello 612 with Ns=263 and Nr=384 from the LNS device 106 after the system switching in the example of Fig. 6. Because the Ns and Nr numbers of the new active system control section 1103 of the LAC device remain Ns=384 and Nr=262, the new active system control section 1103 can not send the ZLB-ACK with Nr=264 for the Hello 612 with Ns=263. The LAC device 1101 is in a state waiting for receiving the message with Ns=262. Therefore, the LNS device 106 resends the Hello 612 to 614, but can not receive the ZLB-ACK from the new active system control section 1103, and finishes resending. Thereafter, the LNS device 106 sends StopCCN 615 that is a tunnel disconnection message of the L2TP to disconnect the L2TP tunnel 616. At this point in time, the communication with the internet connection of the subscriber terminal is once stopped.

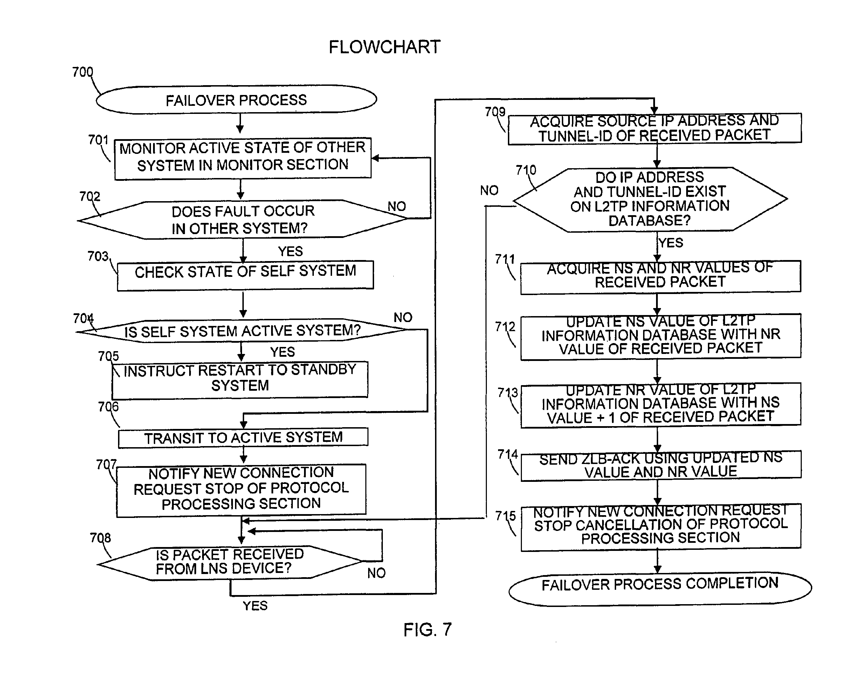

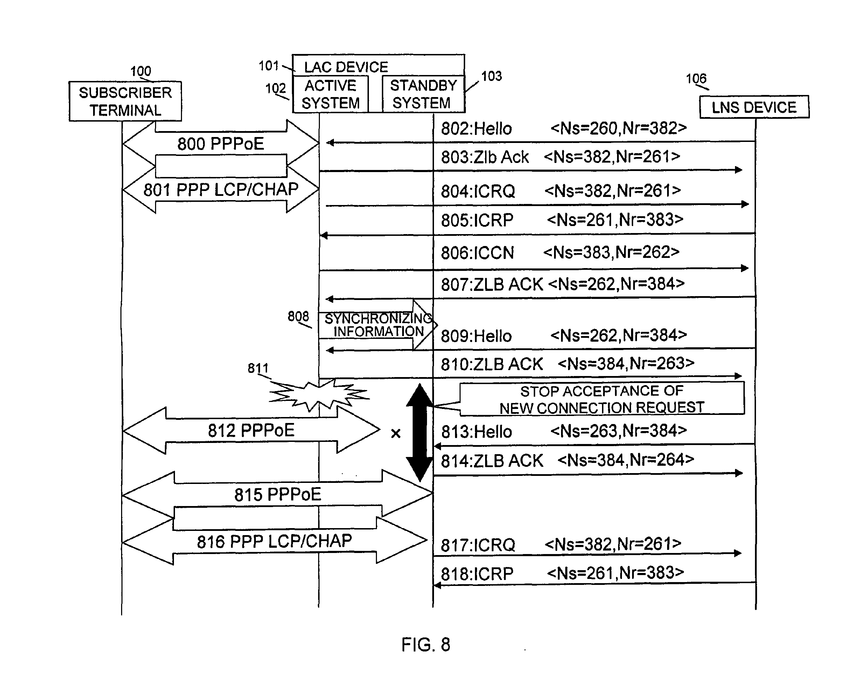

Figs. 7 and 8 show a flowchart and a sequence diagram of a failover process according to this embodiment.

The sequence up to establishing the session 800 to 810 of the subscriber terminal 100 is the same as the conventional method of Fig. 6, and has been described above.

The monitor section 307 monitors the active state of the other system at any time (step 701). If a hardware failure or software failure of the other system is detected (Yes at step 702, 811), the operation state of the self system is checked (step 703). If the operation state of the self system is the active system (Yes at step 704), a restart instruction is given to the standby system control section (step 705), because a failure has occurred in the standby system control section 103. On the other hand, if the operation state of the self system is the standby system (No at step 704), the self system is transferred from the standby system control section to the active system control section (step 706), because a failure has occurred in the active system control section 102. The new active system control section 103 that has transferred from the standby system control section to the active system control section instructs the protocol processing section 303 to stop the acceptance of a new connection request from the subscriber terminal 100 (step 707, 812). If the new connection request is stopped, it is possible to prevent the transmission of a packet consuming the Ns like 210 in Fig. 2 along with the new connection request, and prevent the discrepancy in Ns and Nr between the LAC device and the LNS device.

And the new active system control section 103 receives a control packet (e.g., Hello 813 in Fig. 8) from the LNS device 106 (Yes at step 708, 813), and acquires the source IP address and the Tunnel-ID of the received packet (step 709). The new active system control section 103 retrieves the record in which the acquired source IP address is the Remote IP-Address of the L2TP information database 304, and the acquired Tunnel-ID is the Local Tunnel-ID of the L2TP information database 304. As a result of retrieval, if there is match with the record (Yes at step 710), the new active system control section 103 acquires the Ns value and the Nr value within the received packet (step 711), update the Ns field 401 of the concerned record with the Nr value of the received packet (step 712), and updates the Nr field 402 of the concerned record with the value (Ns value + 1) in which the Ns value of the received packet is incremented by 1 (step 713). Though Ns is incremented one by one in this embodiment, if Ns is changed in the other prescribed rule, the processing at step 713 can obey this rule. And the new active system control section 103 sends the ZLB ACK packet to the LNS device 106 based on the updated Ns value 401 and Nr value 402 (step 714, 814). The new active system control section 103 notifies the protocol processing section 303 of the self system that stop of the new connection request from the subscriber terminal 100 is canceled (step 715, 815), whereby the failover process is completed. After completion of the failover, it is possible to accept the new subscriber connection request while the subscriber terminal information before failure is held without causing the L2TP tunnel disconnection (815 to 818).

The invention is applicable to the LAC device in the L2TP protocol.

## Claims

1. An LAC device in a system which includes an LNS device that provides a network connection service to a terminal and the LAC device that communicates with the LNS device by establishing an L2TP tunnel according to an L2TP protocol, the LAC device and the LNS device sending a control message that includes a sequence number for identifying the control message, and a receive acknowledgement response number that is the sequence number of the control message expected to receive at the next time and is based on the sequence number included in received other control message, and the LAC device sending an acknowledgement response message to the LNS device, upon receiving the predetermined control message including the sequence number of the same value as the receive acknowledgement response number from the LNS device, the L2TP tunnel being disconnected if the acknowledgement response message is not received by the LAC device for the predetermined control message sent from the LNS device, the LAC device comprising:
a first control section for an active system that performs a protocol process for the L2TP by sending and receiving the control message to or from the LNS device;
a second control section for a standby system that is switched to the active system if a fault is detected in the first control section; and
a monitor section for detecting at least the fault in the first control section;
wherein
the second control section, which is switched from the standby system to the active system due to a detection of the fault in the first control section for the active system, learns the sequence number and the receive acknowledgement response number for sending the control message from self LAC device to the LNS device, based on the sequence number and the receive acknowledgement response number of the control message received from the LNS device after a switching.

2. The LAC device according to claim 1, wherein
the second control section sends the acknowledgement response message in which the sequence number is the receive acknowledgement response number within the control message received from the LNS device after the switching and the receive acknowledgement response number is the value obtained in accordance with a prescribed rule based on the sequence number within the received control message to the LNS device.

3. The LAC device according to claim 1, wherein the second control section
stores the sequence number that is the receive acknowledgement response number within the control message received from the LNS device after the switching and the receive acknowledgement response number that is the value obtained in accordance with the prescribed rule based on the sequence number within the received control message, and
performs the protocol process for the L2TP in accordance with the stored sequence number and receive acknowledgement response number.

4. The LAC device according to claim 2, wherein the prescribed rule is to add one to the sequence number within the received control message.

5. The LAC device according to claim 1, wherein
the second control section stops the acceptance of a new connection request from the user, and resumes the acceptance of the new connection request from the user after learning based on the control message from the LNS device.

6. A failover method in a system which includes an LNS device that provides a network connection service to a terminal and the LAC device that communicates with the LNS device by establishing an L2TP tunnel according to an L2TP protocol, the LAC device and the LNS device sending a control message that includes a sequence number for identifying the control message, and a receive acknowledgement response number that is the sequence number of the control message expected to receive at the next time and is based on the sequence number included in received other control message, and the LAC device sending an acknowledgement response message to the LNS device, upon receiving the predetermined control message including the sequence number of the same value as the receive acknowledgement response number from the LNS device, the L2TP tunnel being disconnected if the acknowledgement response message is not received by the LAC device for the predetermined control message sent from the LNS device, the failover method comprising the steps of:
detecting a fault in a first control section for an active system of the LAC device, the first control section performing a protocol process for the L2TP by sending and receiving the control message to or from the LNS device;
switching a second control section for a standby system of the LAC device to the active system; and
learning, by the second control section of the LAC device, the sequence number and the receive acknowledgement response number for sending the control message from self LAC device to the LNS device, based on the sequence number and the receive acknowledgement response number of the control message received from the LNS device after the switching.

7. The failover method according to claim 6, wherein
the step of learning includes sending, by the second control section of the LAC device, an acknowledgement response message in which the sequence number is the receive acknowledgement response number within the control message received from the LNS device after the switching and the receive acknowledgement response number is the value obtained in accordance with a prescribed rule based on the sequence number within the received control message to the LNS device.

8. The failover method according to claim 6, wherein the learning step includes storing, by the second control section of the LAC device, the sequence number that is the receive acknowledgement response number within the control message received from the LNS device after the switching and the receive acknowledgement response number that is the value obtained in accordance with the prescribed rule based on the sequence number within the received control message, and
performing, by the second control section of the LAC device, the protocol process for the L2TP in accordance with the stored sequence number and receive acknowledgement response number.

9. The failover method according to claim 7, wherein the prescribed rule is to add one to the sequence number within the received control message.

10. The failover method according to claim 6, wherein the second control section of the LAC device stops the acceptance of a new connection request from the user after the switching, and resumes the acceptance of the new connection request from the user after the learning based on the control message from the LNS device.
